# EUROPEAN PATENT APPLICATION

(11) **EP 3 944 798 A1**
(43) Date of publication of application: **02.02.2022**
(21) Application number: 21185593.7
(22) Date of filing: 14.07.2021
(51) Int. Cl.: A47J 43/07

(54) **BLENDER JUG**

(30) Priority: 30.07.2020 DE 102020209669
(71) Applicant: BSH Hausgeräte GmbH, 81739 München (DE)
(72) Inventor: Glisic, Zeljko, 3000 Celje (HR); Golavsek, Samo, 3312 Prebold (SI); Gosar, Dejan, 3332 Recica ob Savinji (SI)

(57) **Abstract**

The present invention relates to a blender jug for a hand blender, with a bottom (1) that is surrounded by an uprising wall. When using a hand blender with such a jug this can result in the blender foot of the hand blender wanting to suck on the bottom of the blender jug. This can result in the blending process to come to a stop. To avoid this, it is proposed to provide the bottom (1) on its surface (2) facing the inner volume of the jug with at least one rib (3) that rises from the surface (2) of the bottom (1).

## Description

The present invention relates to a blender jug for a hand blender with a bottom that is surrounded by an uprising wall.

### STATE OF THE ART

Blender jugs and hand blenders are generally known in the art. A blender jug is usually made from glass or plastics. It has a horizontal bottom that is integrally formed with an uprising wall that surrounds this bottom. Usually such a blender jug has the form of a cylinder. Sometimes the form of a blender jug is slightly conical so that it has the form of a truncated cone. It is as well known that the wall is formed with indentations.

Furthermore such a blender jug usually has a handle that is integrally formed at the outer surface or at the upper edge of the jug's wall.

The known hand blenders, that sometimes as well are called immersion blenders, usually have an electrical motor in a tubular handle from which a driveshaft runs in axial direction concentrically through a tube that is connected to said tubular handle. While the tubular handle is attached at the upper end of said tube there is provided a blender foot at the lower end of said tube that has a form substantially as a spherical calotte. This blender foot forms a cover under which a blending tool is situated that is connected to the lower end of the driveshaft to be rotated by the electric motor. The blending tool usually is in the form of a cutting knife having e.g. a cross like form with four blades extending in radial direction. Of course it is possible to have a cutting knife with only two blades that extend in diametrical opposite directions or any other number of mixing knives.

The blades are usually slightly tilted so that they not only cut any processed material e.g. food but as well convey this material by sucking it into the blender foot and pushing it out again afterwards. To facilitate this conveying of material for passing the cutting knife the blender foot can be provided with holes or slots. So the material is sucked in at the lower side of the blender foot, processed by the blending tool within said blender foot and afterwards dispensed from the blender foot through said holes or slots.

From this process results that when working with the hand blender the blender foot wants to suck on the bottom of the blender jug. When the hand blender then sits with its blender foot on the bottom surface of the blender jug the feeding of material to the blending tool is interrupted. So the blending process comes to a stop.

Accordingly a user of the hand blender has to forcibly pull the blender off the bottom of the blender jug to continue the blending process.

### SUBJECT OF THE INVENTION

Accordingly the subject of the present invention is to provide a solution so that the explained interruption of the blending process and the necessity to forcibly pull the blender off the bottom of the blender jug is avoided.

### SUMMARY OF THE INVENTION

To achieve the subject of the present invention it is proposed to provide the blender jug with a bottom that on its surface facing the inner volume of the jug with at least one rib that rises from said surface of the bottom.

The advantage of the invention is that the provided rib reduces the suction effect between the bottom of the blender jug and the blender foot. This is effected as the blender foot cannot rest on the bottom in a way that the opening at the lower side of the blender foot is closed.

A rib according to the invention furthermore has the advantage that it can break any laminar flow that can develop in an area below the opening at the lower side of the blender foot of the hand blender so that the blending process is enhanced.

### PREFERRED EMBODIMENTS OF THE INVENTION

Preferred embodiments with features that can be used either alone or in combination with each other are subject of the dependent claims. Any reference numbers in the claims are considered to be not restrictive but intended to improve the legibility of the claims.

With a special embodiment of the invention the rib has a cross-section in the form of a triangle.

The inventors found that with a rib having such a cross-section the aggressiveness of the food processing can be influenced so that the processing time is shortened.

The best processing results were reached with an angle of the incident surface of said rib (i.e. the angle between the incident surface and a horizontal plane) between 70° and 90°, preferred between 80° and 90°.

The longitudinal extension of the rib is preferred to be substantially in radial direction. This enables the user to position the mixer foot freely over the free width of the blender jug close to its bottom.

Although it is possible to provide the ribs extending in a straight radial direction it has been found that a longitudinal extension in a curved way is advantageous.

In a further preferred embodiment there is provided a plurality of such ribs with each rib extending from the centre of the bottom in the direction to the wall of the jug.

The ribs can be provided directly on the bottom of the blender jug. But in a preferred embodiment the ribs are formed on an insert that is to be placed adjacent to the bottom within the blender jug.

Such an insert has the advantage that it can easily be removed for cleaning of the ribs. Furthermore such an insert gives the possibility to furnish an already existing blender jug with ribs according to the invention.

To improve the handling of such an insert it can be provided with recesses at its circumference. These give the possibility to reach around the insert for removing it when it is situated at the bottom of a blender jug. After the insert is removed it can be cleaned easily and thoroughly.

### SHORT DESCRIPTION OF THE DRAWINGS

Further features and advantages of the present invention can be learned from the following description of the figures that show preferred embodiments but shall not be understood as being limiting for the present application.
Fig. 1 perspective view of a bottom of a blender jug with one rib;
Fig. 2 perspective view of a bottom of a blender jug with a plurality of ribs.

### DETAILED DESCRIPTION OF THE DRAWINGS

In the following description of preferred embodiments same reference numbers are used for same parts.

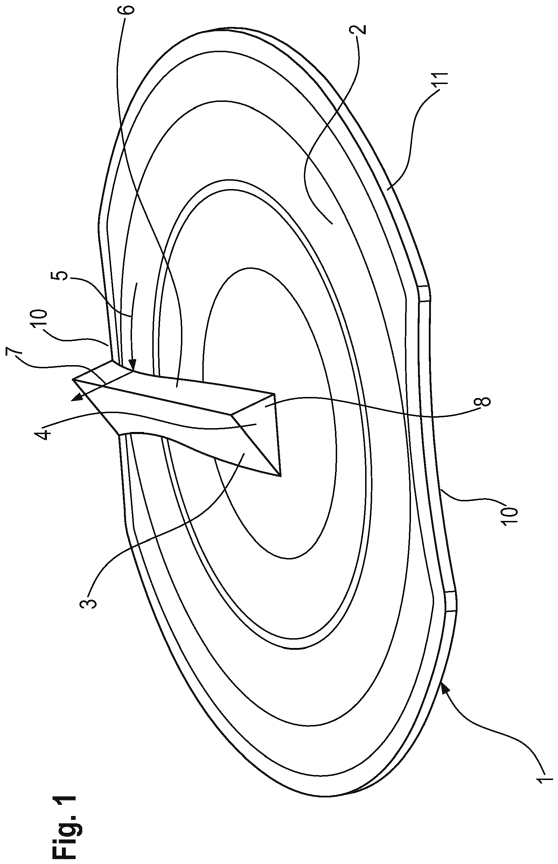

In figure 1 is shown a bottom 1 of a blender jug. The wall of the blender jug is not shown. This wall surrounds this bottom so that the jug has a substantially cylindrical form. The bottom 1 has a substantially flat form, although it may have convex or concave sections.

The upper surface 2 of this bottom is directed towards the inner volume of the blender jug. It is provided with a rib 3. This rib 3 has a cross-section 4 in the form of a triangle.

The blender jug discussed here is used together with a hand blender (not shown). This hand blender has at its lowest end a rotating blending tool, usually a rotating knife with two or more blades. The blending tool is rotated with high speed to process food, e.g. for mincing or chopping it. Above the rotating tool the hand blender is provided with a blender foot that covers the rotating tool/rotating knifes.

Due to an inclination of the rotating knifes the hand blender tends to suck onto the bottom of the blender jug. This is prevented by the above discussed rib 3.

But through the rotation of the blending tool the food adjacent to this tool is brought into a rotational movement usually parallel to the bottom of the blender jug. The direction of this movement is shown by the arrow 5 in figure 1. This movement results in laminar flows of the food that are parallel to the bottom so that the food in these laminar flows is not properly processed.

The food within this laminar flow hits the incident surface 6 of the rib 3 and is deflected upwardly according to the arrow 7 shown in figure 1. The deflected food is directed into the direction towards the running rotation tool/rotating knifes so that the blending process of the food is enhanced.

The best results are achieved if the angle 8 between the horizontal extension of the upper surface 2 and the incident surface 6 approaches 90°. It has been found that with an angle in the range of this value the suction force applied to the blender stick approaches a minimum value.

The rib 3 in figure 1 has a linear extension in radial direction.

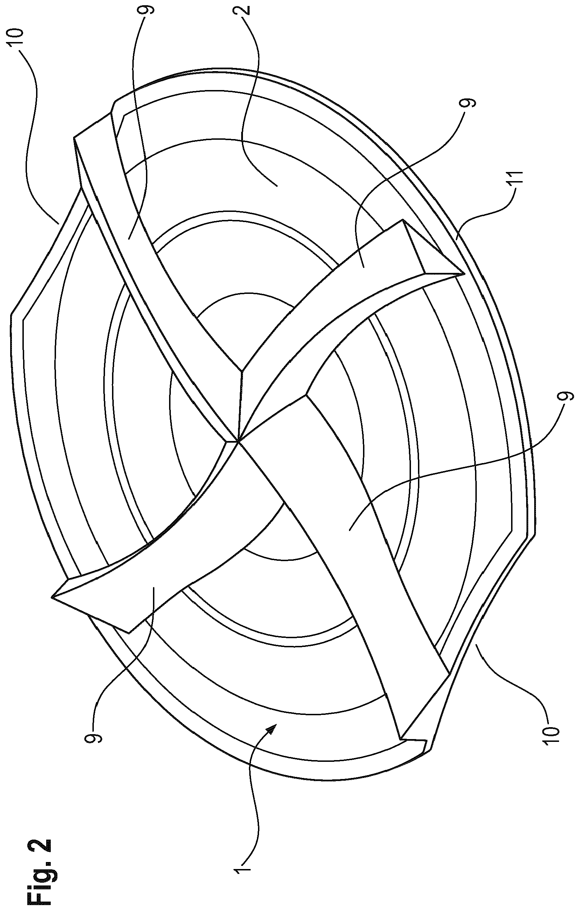

In figure 2 is shown an alternative embodiment: here there is provided a plurality of four ribs 9 having similar cross-sections as the rib 3 discussed above. The four ribs 9 are arranged on the upper surface 2 of the bottom 1 in the form of a cross. These four ribs 9 do not extend linear in radial direction but have a longitudinal extension of a curved form, so that two ribs being arranged opposite to each other together form an S.

Basically it is possible to provide the ribs as discussed above not only directly on the bottom of a blender jug but to equip an insert with such ribs. This insert is then disk-like and can be put into the blender jug and laid onto the bottom before using the blender jug with filling in food and then using the blending stick.

It is suggested to provide such an insert with at least one recess at its circumference, which improves the handling of this insert when removing it from the blender jug: it is possible to reach around the insert through such a recess. Moreover, the recess and a corresponding projecting element on the blender jug can serve as a blocking means to keep the insert in place during processing of the food so that it doesn't rotate.

An insert has the advantage that it can be used for an existing blender jug and that it can be cleaned more easily.

In total the invention improves the handling of a blending stick within the blender jug as well as the efficiency of the blending process.

### LIST OF REFERENCE NUMBERS

- 1: bottom
- 2: upper surface
- 3: rib
- 4: triangular cross-section
- 5: arrow
- 6: incident surface
- 7: arrow
- 8: angle
- 9: curved ribs
- 10: recess
- 11: circumference

## Claims

1. Blender jug for a hand blender, with a bottom (1) that is surrounded by an uprising wall,
**characterised in that**
the bottom (1) on its surface (2) facing the inner volume of the jug is provided with at least one rib (3, 9) that rises from the surface (2) of the bottom (1).

2. Blender jug according to claim 1,
**characterised in that**
the rib (3, 9) has a cross-section (4) in the form of a triangle.

3. Blender jug according to claim 2,
**characterised in that**
the triangular cross-section (4) has one angle (8) between 70° and 90°, preferably between 80° and 90°.

4. Blender jug according to one or more of the claims above,
**characterised in that**
the longitudinal extension of the rib (3, 9) is mainly in radial direction.

5. Blender jug according to claim 4,
**characterised in that**
the rib (9) has a longitudinal extension of a curved form.

6. Blender jug according to one or more of the claims above,
**characterised in that**
a plurality of ribs (9) is provided with each rib (9) extending from the centre of the bottom (1).

7. Insert for a blender jug to be placed adjacent to a bottom of said blender jug, **characterised in that**
it is provided with at least one rib (3, 9).

8. Insert for a blender jug according to claim 7,
**characterised in that**
it is provided with at least one recess (10) at its circumference (11).
